# EUROPÄISCHE PATENTANMELDUNG

(11) **EP 1 319 697 A1**
(43) Veröffentlichungstag der Anmeldung: **18.06.2003**
(21) Anmeldenummer: 02023642.8
(22) Anmeldetag: 21.10.2002
(51) Int. Cl.: C09D 11/10

(54) **Wasserwaschbare Offsetdruckfarbe mit Waschmittel sowie Herstellungsverfahren dazu**

(30) Priorität: 13.12.2001 DE 10161309
(71) Anmelder: Hartmann Druckfarben GmbH, 60388 Frankfurt/Main (DE)
(72) Erfinder: Johnke, Christian, 60388 Frankfurt/Main (DE); Fritz, Bernhard, 60388 Frankfurt/Main (DE)
(74) Vertreter: Rupp, Christian, Dipl.Phys.

(57) **Zusammenfassung**

Die Erfindung betrifft eine wasserwaschbare Druckfarbe zur Verwendung in einem wasserlosen Offset-lithographischen Druckprozess, die auf Ölbasis formuliert ist und ein darauf abgestimmtes wässriges Waschmittel, mit dem ein Gerät wie die Druckmaschine von der Druckfarbe wieder gereinigt werden kann.

## Beschreibung

Die Erfindung betrifft eine wasserwaschbare Druckfarbe auf Ölbasis zur Verwendung in einem wasserlosen Offsetlithographischen Druckprozess und ein darauf abgestimmtes Waschmittel, mit dem ein Gerät wie bspw. eine Druckmaschine wieder von der Druckfarbe gereinigt werden kann.

Um unerwünschte flüchtige organische Verbindungen, wie z.B. Lösungsmittel im Druckmaschinenraum zu reduzieren, werden immer mehr Druckfarben auf Wasserbasis entsprechenden Druckfarben auf organischer Basis, also z.B. öliger Basis, vorgezogen. Dies umso mehr, als manche wasserbasierenden Druckfarben sich nahezu ohne Hilfe organischer Lösungsmittel, die flüchtige Verbindungen freisetzen, abwaschen lassen.

Es sind Druckfarben auf Wasserbasis für Druckprozesse bekannt, insbesondere für flexographische Druckprozesse und Tiefdruckprozesse, bei denen die Bereiche der Druckplatte, die Druckfarbe aufnehmen sollen, durch Erhöhungen oder Vertiefungen der Druckplatte (Reliefverfahren) gekennzeichnet sind.

Für den lithographischen Druckprozess, bei dem die Druckplatte weder Erhöhungen noch Vertiefungen aufweist, ist es besonders schwierig, eine gute Auflösung zu bekommen, weil die Bereiche der Druckplatte, an denen die Druckfarbe nicht haften soll (Nichtbildbereiche) weder hervorgehoben noch vertieft ausgebildet sind, sondern sich auf derselben Ebene wie die Bereiche befinden, die frei von Druckfarbe bleiben sollen.

Um zu gewährleisten, dass sich die Druckfarbe tatsächlich nur auf die Bereiche beschränkt, die die Bildbereiche der Druckplatte sind, werden besondere Techniken angewandt.

Bei den herkömmlichen Offset-Druckprozessen wird die Druckplatte vor dem Kontaktieren mit Druckfarbe angefeuchtet. In der Regel werden zum Anfeuchten Mittel verwendet wie sie bspw. aus den US 4,278,467 oder US 4,854,969 bekannt sind. Dabei wird die Druckplatte so vorbereitet, dass Wasser die hydrophilen Nichtbildbereiche benetzt und auf den hydrophoben Bildbereichen der Druckplatte zu kleinen Tröpfchen kontraktiert und abperlt. Dies führt dazu, dass beim Überstreichen der Druckplatte mit einer mit öliger Druckfarbe getränkten Walze die Druckfarbe nur auf den lipophilen Bildbereichen haftet und die Nichtbildbereiche frei von Druckfarbe bleiben.

Als Offset-Druckprozess wird ein Prozess bezeichnet, bei dem die so vorbereitete Druckplatte nicht direkt mit dem zu bedruckenden Substrat, also z.b. Papier, in Kontakt gebracht wird, sondern erst mit einem Gummituch in Kontakt kommt, die dann auf das Papier gedruckt wird.

Problematisch beim herkömmlichen Offset-Druckprozess ist unter anderem, dass die beiden Komponenten (wasserbasierende Feuchtmittel und ölige Druckfarbe) in der Regel einen hohen Anteil an flüchtigen organischen Verbindungen haben, der toxikologisch bedenklich ist.

Es wurden Anstrengungen unternommen, um wasserlose lithographische Druckprozesse zu entwickeln. Dabei werden die Nichtbildbereiche der Druckplatte mit einem Polymer überzogen, das die Druckfarbe abweist. Die Bildbereiche werden z.b. mit einem photosensiblen Polymer überzogen. Solche Druckprozesse sind beispielsweise aus der US 5,370,906 und der US 5,417,749 bekannt.

Nachteilig an den bekannten wasserlosen Druckverfahren ist, dass der Unterschied in der Oberflächenenergie zwischen Bildbereich und Nichtbildbereich drastisch, nämlich von etwa 40 mN/m auf 20 mN/m reduziert wird.

Um einen hohen Unterschied an Oberflächenenergie zwischen Bildbereich und Nichtbildbereich, der für eine gute Auflösung wichtig ist, zu erhalten, bleibt daher nur der Einsatz von Druckfarben auf Ölbasis. Dabei ist vor allem nachteilig, dass die Druckfarben nicht wasserwaschbar sind und beim Reinigen der Druckmaschinen wieder organische Lösungsmittel eingesetzt werden müssen.

Aus der WO 96/34923 ist eine Druckfarbe bekannt, deren Bindemittel auf Ölbasis formuliert ist und die mit einem wässrig-alkalischen Medium abgewaschen werden kann. Nachteilig an dieser Formulierung ist, dass sie nicht vollständig wasserwaschbar ist und freie Carboxylgruppen enthält.

Zur Reinigung der beim Drucken eingefärbten Maschinenteile und Geräte werden heute hauptsächlich organische Waschund/oder Lösungsmittel verwendet. Nachteilig an den organischen Waschmittel ist, dass sie häufig flüchtige, toxikologisch nicht unbedenkliche Verbindungen freisetzen.

Aufgabe der vorliegenden Erfindung ist es daher, eine wasserwaschbare Druckfarbe für den wasserlosen Offsetdruck sowie ein dazugehöriges mildes Waschmittel zur Verfügung zu stellen, bei deren Einsatz im wesentlichen keine organischen flüchtigen Verbindungen freigesetzt werden werden.

Gegenstand der Erfindung ist eine wasserwaschbare Druckfarbe für den wasserlosen Offsetdruck, aufweisend folgende Komponenten:
a) ein Bindemittel, das das Reaktionsprodukt eines festen Harzes in Lösungsmittel mit einem Alkydharz und/oder einem Öl einer oder mehrerer aliphatischer Carbonsäureester ist,
b) eine farbgebende Komponente und
c) eine Base.

Ausserdem ist Gegenstand der Erfindung ein Waschmittel für die wasserwaschbare Druckfarbe, das Wasser mit Zusätzen wie Komplexbildner, Base, Duftstoffe und/oder Netzmittel umfasst.

Schließlich ist Gegenstand der Erfindung die Herstellung der Druckfarbe und des Waschmittels.

Als festes Harz (Position 21 in der Tabelle) wird bevorzugt ein Harz mit einer Säurezahl (SZ) im Bereich von 10 bis 200mg KOH/g, bevorzugt 30 bis 150mg KOH/g und insbesondere bevorzugt eines mit 50 bis 90mg KOH/g eingesetzt. Insbesondere haben sich alle Harze bewährt, die in Ester auf Basis von pflanzlichen, tierischen oder synthetischen Fettsäuren löslich sind. Beispiele dafür sind Kolophoniumesterharze, Maleinatharze, Fumaratharze, Kohlenwasserstoffharze, Terpenharze sowie Modifikationen (Derivate) davon.

Als Alkydharz (Position 22 in der Tabelle) kann ein Leinölalkydharz und/oder Modifikationen davon eingesetzt werden. Das Öl einer oder mehrerer aliphatischer Carbonsäureester ist bevorzugt ein trocknendes Öl, insbesondere ein oxidativ trocknendes. Es können auch halbtrocknende Öle und/oder Alkydharze eingesetzt werden,. Das Alkydharz und/oder das Öl hat bevorzugt eine Säurezahl von 0 bis 150mgKOH/g, insbesondere bevorzugt im Bereich von 15 bis 75 mgKOH/g.

Das Bindemittel (Position 14), das das Reaktionsprodukt aus dem genannten festen Harz in Lösungsmittel mit einem Alkydharz und/oder einem Öl - unter Zugabe weiterer Zusätze wie Hautverhinderungsmittel und Gelier-Verdickungsmittel - ist, ist in der Druckfarbe im Bereich von 30 bis 60 Gew% enthalten, wobei im Bindemittel der Anteil an festem Harz und/oder an Lösungsmittel je 40 bis 50 Gew% ausmacht, der Anteil an Alkydharzkomponente ca. 4 bis 8 Gew% und der Rest auf 100 Gew% aus Gelier- oder Verdickungsmittel und Hautverhinderungsmittel besteht.

Die Druckfarbe kann noch andere Alkydharze und/oder Öle (Positionen 1 bis 3) enthalten, die nicht mit den festen Harzen umgesetzt werden. Dabei sind die oxidativ trocknenden Harze bevorzugt, beispielsweise hochviskose Alkydharze mit einer Säurezahl zwischen 50 und 100mgKOH/g oder viskose Alkydharze mit freien Hydroxylgruppen (OH-Zahl größer 80), schließlich modifiziertes Leinöl oder maleinierte pflanzliche Öle vorzugsweise neben Leinöl auch Sojaöl, mit einer Säurezahl von etwa 35 bis 50mgKOH/g. Diese Alkydharze dienen der Pigmentbenetzung, dem Glanz, der oxidativen Trocknung, der Scheuerfestigkeit der Druckfarbe und schließlich begünstigen sie auch die Wasserwaschbarkeit der Druckfarbe. Diese Alkydharze können im Bereich von 0 bis 20 Gew%, bevorzugt von 5 bis 17 Gew% und insbesondere bevorzugt von 10 bis 15 Gew% in der Rezeptur der Druckfarbe enthalten sein.

Als Beispiele für das Öl einer oder mehrerer aliphatischer Carbonsäureester (Position 3) seien Fettsäuren mit zumindest 8 Kohlenstoff-Atomen genannt, Leinöl, Sojaöl, Rapsöl, Fischöl, Walöl, sowie synthetische und halbsynthetische Öle. Die Wahl des Öls richtet sich, unter anderem, nach der Art der Druckfarbe, die hergestellt werden soll, entsprechend können nicht-trocknende Öle in Reaktionsprodukten eingesetzt werden, die für Zeitungsdruckfarbe geeignet sind, wohingegen sich Sojaöl eher für Heatset-Rollenoffsetdruckfarbe empfielt. Öle sind beispielsweise in "Printing inks for Lithography" von Owen D.J., SITA Technology, 1994, Seiten 45 bis 58 beschrieben.

Als Lösungsmittel und/oder Rheologie-Stellmittel (Positionen 17 bis 19) werden insbesondere Ester auf Basis von pflanzlichen, tierischen und/oder synthetischen Fettsäuren, mit Veresterungskomponenten wie mehrwertigen Alkoholen, Butanol, Isopropanol, Ehtylhexanol, Glykol, etc. eingesetzt.

Bevorzugt ist auch der Ester der Kokosnussfettsäure, insbesondere bevorzugt der Ethylhexylester.

Andere Alkohole, wie schwerflüchtiges Propylenglykol, Diethylenglykol, Polypropylenglykol, Glykolether und/oder Hexylenglykol eignen sich auch als Lösungsmittel, weil keine flüchtigen organischen Verbindungen freigesetzt werden.

Als farbgebende Komponente (Positionen 7 bis 11) können eine breite Variation bekannter und handelsüblicher Pigmente und Ruße eingesetzt werden. Insbesondere können für den Vierfarbsatz Gelbpigmente, Blaupigmente, Rotpigmente und Russ genommen werden. Die Pigmente sind zusammen mit maximal 25 Gew%, insbesondere 10-15 Gew% in der Druckfarbe enthalten.

Als Base (Position 13) können alle Basen eingesetzt werden, beispielsweise NaOH, KOH, oder organische Basen wie Monoethanolamin, Dimethylethanolamin, Triethanolamin, Diethanolamin und/oder Ammoniak. Bevorzugt sind aminfunktionelle Basen, insbesondere bevorzugt Aminomethylpropanol. Die Base ist im Bereich von 1 bis 3 Gew% in der Druckfarbe enthalten, bevorzugt mit ca 2 Gew%.

Neben den essentiellen Bestandteilen der Druckfarbe wie Bindemittel, farbgebende Komponente und Base können noch Additive wie rheologische Hilfsmittel, Verdickungsmittel, Scheuerschutz, Beschleuniger (bevorzugt für die Trocknung, insbesondere bevorzugt für die oxidative Trocknung), Tackregulatoren, Hautverhinderungsmittel und/oder Geliermittel in der Druckfarbe enthalten sein.

Als rheologisches Hilfsmittel (Position 5) wird ein Extenderpigment z.b. Kreide PW 18, Talkum, Kaolin oder ähnliches verwendet. Das rheologische Hilfsmittel ist im Bereich von 0 bis 5 Gew% in der Formulierung enthalten.

Als Verdickungsmittel (Position 6 und 23) können die üblichen Verdicker wie Hectorit, amorphe Kieselsäuren, assoziativ Verdicker, Geliermittel und/oder Polyamidoamine eingesetzt werden. Bevorzugt wird ein Bentonit und/oder eine Aluminiumorganische Verbindung eingesetzt. Das Verdickungsmittel liegt in der Formulierung mit 0 bis 2Gew% vor.

Zum Scheuerschutz (Position 12) werden PE-, PTFE-, Paraffinwachs und andere Wachspasten auf dieser Basis eingearbeitet. Bevorzugt wird ein mikronisiertes Paraffinwachs genommen. Die Komponente kann in der Druckfarbe z.b. im Bereich von 0 bis 2 Gew% enthalten sein.

Die Beschleuniger (Position 15) sind bevorzugt Trockenstoffe auf Cer, Zirkon, Zink, Calcium Basis, insbesondere bevorzugt auf Co/Mn Basis. Bewährt hat sich ein Cobalt Mangan Sikkativ. Der Beschleuniger liegt im Bereich zwischen 1 bis 5 Gew% vor.

Als Tackregulator (Position 16) wird ein Siloxan eingesetzt, insbesondere ein Polyimethylsiloxan. Diese Komponente kann zwischen 0 und 2 Gew% der Druckfarbe ausmachen.

Als Hautverhinderungsmittel (Position 4 und 20) wird ein Antioxidans eingesetzt. Bevorzugt werden Phenolderivate, Hydrochinon, Monotertiärbutylhydrochinon, Toluolhydrochinon, insbesondere bevorzugt werden 2,2Methylenbis(4Methyl-6-tert-Butylphenol). Diese Komponente kann zwischen 0,1 und 1 Gew% in der Druckfarbe enthalten sein.

Zur Herstellung wird zunächst das Bindemittel durch Umsetzung des gelösten festen Harzes in Lösungsmittel mit dem Alkydharz bei erhöhter Temperatur hergestellt. Die Druckfarbe wird dann durch Vorlegen des Bindemittels und der flüssigen Bestandteile (Alkydharze, Lösungsmittel pflanzliche Öle etc.) und Vermischung dieser mit den pulverförmigen Bestandteilen wie Pigmenten, Wachs, Verdicker erhalten. Am Ende erfolgt die Umsetzung des Reaktionsproduktes mit den noch freien Carboxylgruppen des Bindemittels und/oder der Alkydharze mit der Base. Sie führt zur Salzbildung, die später das Anlösen und/oder das Abwaschen mit Wasser ermöglicht. Die Umsetzung mit Base soll möglichst quantitativ erfolgen, damit eine vollständige Salzbildung stattfindet. Danach erfolgt die Zugabe des Beschleunigers, Tackregulators und weiterer Lösungsmittel.

Das Waschmittel umfasst Wasser und geringe Zusätze wie Netzmittel, Schmiermittel, Entschäumer, Base, Emulsionsstabilisierer, Korrosionsschutz und/oder Duftstoffe.

Als Netzmittel und/oder Emulgierhilfsmittel (Position 24) im Waschmittel werden anionische oder nichtionische Netzmittel z.b. etoxylierte Fettsäuren und/oder Alkohole, Alkyl- oder Arylsulfonate; Alkyl- und/oder Arylethersulfate genommen. Bevorzugt werden Sulfate und Dialkylsulfate, insbesondere Ethylhexylsulfat. Diese Hilfsmittel werden als wässrige Lösung mit einem Wasseranteil von ca. 60 Gew% eingesetzt und deren Anteil liegt im Bereich von 2 bis 20 Gew%. Der reine Gehalt an Zusatz liegt also maximal bei 8 Gew %

Als Schmiermittel und Lösehilfsmittel (Position 25) kann nach einer Ausführungsform dem Waschmittel noch ein hochsiedender Alkohol, insbesondere einer mit einem Dampfdruck kleiner 0,1mbar, wie Glykol oder Glykolether, auch Glycerin zugesetzt werden. Bevorzugt wird ein Propylenglykol, insbesondere bevorzugt ein Polypropylenglykol. Das Schmiermittel und/oder Lösehilfsmittel wird in einer Menge von 0 bis 20 Gew% zugesetzt.

Schließlich beinhaltet das Waschmittel noch einen Entschäumer (Position 26), insbesondere einen auf der Basis eines Siloxans und/oder eines Mineralöls. Bevorzugt wird ein Organosiloxan verwendet.

Etwas Alkali (Position 27) wie NaOH, KOH und/oder andere Basen wie Amine ist im Waschmittel auch enthalten, beispielsweise eine Lösung von 40% NaOH in Wasser, die zur vollständigen Verseifung der Carboxylgruppen dient. Das wässrige Alkali ist bevorzugt in einer Menge von 0,5 bis 5 Gew% im Waschmittel enthalten.

Als Emulsionsstabilisierer, Builder oder Dispergierhilfsmittel (Position 28) werden Builder wie Zeolith, Natriummetasilikat, Phosphat und/oder Nitriloessigsäure eingesetzt. Bevorzugt wird ein Salz eines Polycarboxylats genommen, insbesondere bevorzugt das Natriumsalz eines Malein-Acrylsäure Polycarboxylats. Der Emulsionsstabilisierer kann, als Lösung mit etwa 75 Gew% Wasser im Waschmittel einen Anteil von 5 bis 20 Gew% ausmachen.

Zum Korrosionsschutz und/oder zur Sequestierung (Position 29) wird ein Komplexbildner wie ein Phosphonat, Phosphat, EDTA und/oder ein Gluconat eingesetzt. Bevorzugt wird ein Phosphonat, insbesondere bevorzugt ein Natriumphosphonat genommen. Diese Komponente, als Lösung mit 68 Gew% Wasser kann einen Anteil von 1 bis 5 Gew% des Waschmittels ausmachen.

Das Waschmittel enthält die oben genannten Zusätze je nach Menge an farbgebender Komponente in der Druckfarbe und/oder je nach Verschmutzung der zu reinigenden Teile. Bevorzugt macht der Wasseranteil (Position 30) im Waschmittel 70 bis 97Gew% aus, bevorzugt 85 bis 95 Gew% und insbesondere bevorzugt 90 Gew%. Generell wird ein höherer Wasseranteil im Waschmittel einem niedrigeren immer vorgezogen.

Im folgenden wird die Erfindung noch anhand bevorzugter Ausführungsformen der Rezeptur (Beispiele 1 bis 4; tabellarisch, unter Angabe der genannten Positionen), anhand einer Ausführungsform des Verfahrens und eines Beispiels für eine Ausführungsform des Waschmittels beschrieben.

| **Position** | **Rohstoff/ Produktnr.** | **Beispiel 1 (Gew.- %)** | **Beispiel 2 (Gew.-%)** | **Beispiel 3 (Gew.- %)** | **Beispiel 4 (Gew.-%)** | **Bereich (Gew.-%)** |
|---|---|---|---|---|---|---|
| 1 | Alkyd 23 | 10,5 | 11,3 | 11,3 | 12,7 | 0-20 |
| 2 | Hydrokyd 9 | 7,5 | 11,3 | 11,3 | 12,7 | 0-20 |
| 3 | Resydrol Val 5527 W | 7 | 8,5 | 8,5 | 10 | 0-20 |
| 4 | Lowinox 22 M 46 | 0,3 | 0,3 | 0,4 | 0,2 | 0,1-1 |
| 5 | ASP 170 | 3,00 | | | | 0-5 |
| 6 | Bentone SD1 | | | 1,00 | 1,00 | 0-2 |
| 7 | Symuler Fast Yellow 4319 | 10,5 | | | | 8-18 |
| 8 | Fastogenblue H 5375 SD | | | 14,5 | 1,9 | 13-22 |
| 9 | Elftex 415 | | | | 14,5 | 14-22 |
| 10 | Ecocart Orange | 0,6 | | | | 0-1 |
| 11 | Pigment red 57:1 | | 14,5 | | | 13-22 |
| 12 | Vestowax SPray 30 | 2,00 | 1,5 | 1,00 | 1,00 | 0-2 |
| 13 | AMP 95 | 1,5 | 2 | 2 | 2 | 1-3 |
| 14 | varnish | 50,1 | 43,6 | 44,60 | 39,45 | 30-60 |
| 15 | Manosec cd 26 | 3,00 | 3,00 | 3,00 | 2,00 | 1-5 |
| 16 | Siliconöl 47 V 50 | 1,20 | 0,30 | 0,40 | 0,30 | 0-2 |
| 17 | Estisol 312 | | | | 2,00 | 0-5 |
| 18 | Dowanol TPM | 2,8 | 3,7 | 2 | 0,25 | 0-5 |
| | Summe: | 100,00 | 100,00 | 100,00 | 100,00 | |

| | | | | |
|---|---|---|---|---|
| Viskosität: 100 1/s | | | | |
| [Pas] 30°C | 31,3 | 36,1 | 34,2 | 37,7 |
| Inkomat 300 1/min (Spaltfähigkeit) | 8,3 | 10,1 | 10,4 | 10,2 |

### Zusammensetzung Varnish (Position 14):

**Tabelle 1**

| **Position** | **Rohstoff/ Produktnr.** | **Beispiel 1 (Gew.-%)** |
|---|---|---|
| 19 | Estisol 312 | 48,90 |
| 20 | Mono-Tertiär-Butylhydrochinon | 0,10 |
| 21 | Tergraf 940 | 44,50 |
| 22 | Beckosol L655I | 6,00 |
| 23 | Additol VXL 12 | 0,5 |
| | Summe: | 100,00 |

**Tabelle 2**

| **Position** | **Rohstoff** | **Beispiel (Gew.-%)** | **Bereich (Gew.-%)** |
|---|---|---|---|
| 24 | Serdet DSK 40 | 10 | 2-20 |
| 25 | Pluriol P 600 | 5 | 0-20 |
| 26 | Dee fo 35 | 0,05 | 0,01-0,1 |
| 27 | Natronlauge | 2,45 | 0,5-5 |
| 28 | Sokolan CP 9 | 10 | 5-20 |
| 29 | Dequest 2060 | 2 | 1-5 |
| 30 | Wasser | 70,5 | 60-80 |
| | | | |
| | | 100 | |

Grundlage der Druckfarbenproduktion ist die Herstellung des Bindemittels:

Zur Herstellung des Varnish wird in einem Reaktor oder beheizbarem Rührkessel das "Lösungsmittel" und gegebenenfalls andere Zusatzstoffe wie z.B. Alkydharze, pflanzliche Öle, Antioxidantien vorgelegt (Positionen 19 und 20). Diese Mischung wird auf Temperaturen, die üblicherweise zwischen 160-260°C liegen, in der Regel 180°C, aufgeheizt. Dann erfolgt die gleichmäßige Zugabe des festen Harzes (Position 21). Dabei kühlt sich der Ansatz etwas ab. Nach Erreichen der 180°C wird diese für 1 bis 3 Stunden gehalten. Der Ansatz wird dann abgekühlt. Es erfolgt dann die Zugabe eines weiteren Zuschlagsstoffes (Position 22) z.B. Alkydharze, pflanzliche Öle oder weiteres Lösungsmittel. Nach Erreichen einer Temperatur zwischen 80 und 120°C (gelmittelabhängig) werden unter schnellem Rühren die Gelier- oder Verdickungsmittel (Position 23) zugegeben. Der Ansatz wird dann wieder auf 160 bis 180°C aufgeheizt und dort für 0,5 bis 1 Stund gehalten. Das Bindemittel wird dann abgekühlt auf Temperaturen zwischen 80 bis 120°C. Gleichzeitig erfolgt die Qualitätskontrolle. Es werden Viskosität und Tack bestimmt. Gegebenenfalls erfolgt dann eine Korrektur z.B. mit Lösungsmittel.

Im folgenden soll die eigentliche Herstellung der Druckfarbe erläutert werden:

In einem Ansatzbehälter werden das Bindemittel, Alkydharze, pflanzliche Öle und Lösungsmittel vorgelegt (Positionen 1 bis 4 und 14). Es erfolgt eine Mischung mit dem Dissolver. Dann werden die pulverförmigen Bestandteile wie z. B. Pigment, Wachs, Verdicker usw. zugesetzt (Positionen 5 bis 20). Wieder erfolgt ein Mischen unter dem Dissolver. Dieser Mahlansatz wird dann in einem geeigneten Aggregat bis zu einer Kornfeinheit kleiner 10µm dispergiert. Hierzu werden üblicherweise Dreiwalzenstühle oder Rührwerkskugelmühlen verwendet.

Danach erfolgt die Umsetzung der, im Bindemittel und den Alkydharzen (Positionen 1 bis 3) enthalten, Carboxylgruppen mit Alkalien z.B. Amin (Position 13). Dies führt zu einer Salzbildung, die später das Anlösen bzw. Waschen mit Wasser bewerkstelligt. Das Amin muss mindestens 10 Minuten lang sorgfältig eingerührt werden um zu gewährleisten, dass das Amin weitestgehend umgesetzt worden ist. Dann erfolgt der Zusatz der fehlenden Komponenten (Positionen 15 bis 18). Abschließend erfolgt dann eine Qualitätskontrolle, bei der die Viskosität, Fließgrenze und Tack bestimmt und gegebenenfalls korrigiert werden.

## Patentansprüche

1. Druckfarbe für den Offsetdruck, aufweisend folgende Komponenten:
a) ein Bindemittel, das das Reaktionsprodukt eines festen Harzes in Lösungsmittel mit einem Alkydharz und/oder einem Öl einer oder mehrerer aliphatischer Carbonsäureester ist,
b) eine farbgebende Komponente und
c) eine Base.

2. Druckfarbe nach Anspruch 1,
bei der das Bindemittel in einer Menge zwischen 30 bis 60 Gew%, die farbgebende Komponente in einer Menge zwischen 48 bis 85 Gew% und/oder die Base in einer Menge zwischen 1 bis 3 Gew% enthalten ist.

3. Druckfarbe nach einem der Ansprüche 1 oder 2,
bei der als Base eine aminofunktionelle Base eingesetzt wird.

4. Druckfarbe nach einem der vorstehenden Ansprüche,
bei der als Base Aminomethylpropanol eingesetzt wird.

5. Waschmittel für den Offsetdruck, das auf einer wässrigen Lösung basiert und einen alkalischen Zusatz im Bereich bis zu 2 Gew% umfasst.

6. Waschmittel nach Anspruch 5,
das im Bereich zwischen 85 und 95 Gew% Wasser umfasst.

7. Herstellung einer Druckfarbe für den Offsetdruck, bei der zunächst das Bindemittel hergestellt wird, in das Bindemittel dann die farbgebenden Komponenten und gegebenenfalls Zusätze eingearbeitet werden und vor der Zugabe von rheologischen Hilfsmittel und Lösungmittel die Verseifung der freien Carboxylgruppen der Druckfarbe durch Zugabe von Base erfolgt.
